Europäisches Patentamt

European Patent Office

Office européen des brevets

(19)

(11) Publication number: **0 152 218**
**A2**

# (12) EUROPEAN PATENT APPLICATION

(21) Application number: **85300557.7**

(22) Date of filing: **28.01.85**

(51) Int. Cl.⁴: **A 23 L 1/216**
**A 23 P 1/08**

(30) Priority: **03.02.84 GB 8402930**

(43) Date of publication of application:
**21.08.85 Bulletin 85/34**

(84) Designated Contracting States:
**AT BE CH DE FR GB IT LI LU NL SE**

(71) Applicant: **WITCH CHIPS LTD.**
**Bar Lane**
**Boroughbridge York, Y05 9LS(GB)**

(72) Inventor: **Chessman, Alec**
**12 Kingstonia Gardens**
**Ripon North Yorkshire(GB)**

(74) Representative: **Virr, Dennis Austin**
**URQUHART-DYKES & LORD New Exchange Buildings**
**Queen's Square**
**Middlesbrough, TS2 1AB(GB)**

(54) Method of producing a filled potato and the product thereby obtained.

(57) A method of producing a filled potato comprises removing an elongated core from the potato and inserting therein a pre-formed, flavour-containing cartridge. For example, the potato may be at least partially baked before the core is removed and a range of cores of different flavour may be available for insertion in the potato when the filled potato is required.

EP 0 152 218 A2

# METHOD OF PRODUCING A FILLED POTATO AND THE PRODUCT THEREBY OBTAINED

The present invention comprises a novel method of producing a filled potato and includes the novel product thereby obtained.

Baked potatoes containing a flavoured filling have long been a popular product and in recent years they have been increasingly offered in fast-food establishments. In addition, an increasingly wide range of flavours has been offered, to the extent that the establishment concerned may have to make available perhaps five or ten or more differing filling flavours. Many such establishments purchase the potatoes ready-filled and in a frozen condition and so the demands on low-temperature storage capacity increase considerably as the range of flavours increases. The alternative of baking and filling potatoes to specific order is scarcely suitable for fast-food sales.

So far as the supplier of such frozen products is concerned, the usual method of production is quite labour-intensive and little suited to large-tonnage operations. Conventionally, each potato must be baked, then split by cutting to the point where the halves are incompletely severed; the selected filling is then inserted into the open split and the filled product then frozen before delivery to the point of eventual sale.

There is therefore a need for an improved method of producing filled potatoes, which is better adapted to large-scale production and which affords greater flexibility at the point of sale. The present invention provides such an improved method.

The method of producing a filled potato according to the present invention is characterised by the step of removing an elongated core from a potato and inserting a pre-formed, flavour-containing cartridge in the interior of the potato. It will readily be appreciated that removal of an elongated core is an operation more readily adapted to mechanisation than the partial splitting operation heretofore employed. It will also be recognised that insertion of a pre-formed flavour cartridge affords easier and more flexible flavouring of the final potato product than the conventional prior method.

Our invention also includes filled baked potatoes prepared by the method of the present invention.

The stages in the preparation of the final product at which the operations of removal of a core and insertion of a flavour cartridge are carried out are a matter of choice or preference. However, we prefer that the potato be at least partially or largely baked before the core of potato is removed. If the core is removed before baking and not also refilled then the integrity of the potato during baking is less well preserved. If, on the other hand, the core is removed and the filling inserted before baking is carried out, then the filling itself may be over-cooked.

The baking operation readily lends itself to large-scale, preferably batch-wise, operation and is carried out in the conventional manner.

From the potato, preferably after such baking, an elongated core is removed. For example, by manual or mechanical means, a cylinder of potato flesh extending towards the centre of the potato is removed. This may be achieved using a simple

- 3 -

0152218

hand-tool, for example a short cylindrical cutter, or a more mechanised drilling tool may be used. The operation may be carried out on a large number of potatoes in relatively quick succession by providing a drilling machine which operates upon potatoes conveyed to and from the machine by means of a conveyor belt. The individual potatoes may be set up by hand or the conveyor may be designed to present the potatoes to the machine one or more at a time. Thus the whole core-removal operation may be controlled automatically if desired.

It is preferred that the core of potato removed extend inwards to about the centre or a short distance beyond the centre of the potato, but it is acceptable for the core to extend completely through the potato if control of the cutting is thereby rendered more easy.

The potato may at this stage be frozen and delivered as such to the customer. Alternatively, the flavour cartridge may be inserted into the potato and the filled potato then delivered to the customer, preferably after freezing. When we refer herein to "the customer", we are primarily contemplating the establishment which sells individual potatoes to the ultimate consumer but of course, subject only to normal considerations of marketing convenience and cost, the potato, before or after filling, may be delivered to the ultimate consumer direct.

If the potato is filled before delivery, the benefits of mechanisation of the cutting and filling operation may be taken but the desirable flexibility at the final point of sale is not achieved. It is therefore preferred that the insertion of the flavour cartridge be carried out after delivery of the potatoes. Thus potatoes, ready for filling, and flavour cartridges may be delivered separately to a fast-food establishment, not necessarily by the same supplier.

The flavour-containing cartridge is pre-formed so that it can be inserted without difficulty into the potato. It may consist of flavouring material alone or the flavouring may be dispersed in an acceptable solid or liquid diluent. Thus the cartridge may be a mixture of potato, preferably pre-cooked, and flavouring. Advantageously the cartridge may be frozen. If desired, the flavouring material may be contained in a wrapping of material which is soluble or destroyed or converted to palatable form by the final heating or cooking step. The cartridge of flavouring may, if desired, be inserted into the potato by means of an appropriate dispenser.

If the potato and the flavour cartridge have both been fully cooked, then the final step required is simple heating of the potato. Alternatively, the potato and/or the flavour cartridge may be uncooked or, preferably, partially cooked, in which case the cooking is completed as the final step at the point of sale of the filled product.

Example

In one example of the carrying out of the method according to our invention, which example represents a preferred embodiment of our invention, a number of potatoes were first fully baked in an oven. From each of the potatoes, a generally cylindrical core of baked potato flesh extending to the centre of the potato

was removed. The potatoes were then frozen and transferred to another site (the notional point of sale).

The removed potato flesh from all of the potatoes was combined and mashed and then divided into three parts. To each part, different flavouring was added and mixed therein, the flavourings consisting of cheese, tomato puree and curried meat. The three mixtures were shaped into a number of plugs or cartridges of approximately the same shape and size as the originally removed cores and the plugs were then individually frozen. The frozen plugs were delivered to the notional point of sale.

At this "point of sale", the plugs were inserted into the potatoes and the plugged potatoes were placed in a microwave oven and heated until they were ready for eating. The resulting potatoes proved to be of wholly satisfactory flavour and were, of course, available for eating within a few minutes of the consumer having selected the desired flavour.

0152218

1. A method of producing a filled potato comprising removing an elongated core from a potato and inserting a pre-formed, flavour-containing cartridge in the interior of the potato.

2. A method according to claim 1, wherein the potato is at least partially baked before removal of the elongated core.

3. A method according to claim 1 or claim 2, wherein the elongated core is removed by means of a power-driven rotary cutter.

4. A method according to claim 3, wherein a number of potatoes are conveyed in succession to the rotary cutter by means of a conveyor belt.

5. A method as claimed in any of the preceding claims, wherein the elongated core extends to about the centre or a short distance beyond the centre of the potato.

6. A method as claimed in any of the preceding claims, wherein the potato is frozen before insertion of the flavour-containing cartridge.

7. A method as claimed in any of the preceding claims, wherein the flavour-containing cartridge is frozen before insertion in the potato.

8. A method as claimed in any of the preceding claims, wherein the cartridge comprises a mixture of potato and flavouring.

9. A method as claimed in any of the preceding claims, wherein the cartridge is contained in a wrapping of material which is soluble or destroyed or converted to palatable form by a final heating or cooking of the filled potato.

10. A method as claimed in any of the preceding claims, wherein the cartridge is inserted into the potato by means of a dispenser.